# EUROPEAN PATENT SPECIFICATION

(11) **EP 4 467 310 B1**
(45) Date of publication and mention of the grant of the patent: **11.11.2026**
(21) Application number: 24177164.1
(22) Date of filing: 21.05.2024
(51) Int. Cl.: B29B 11/16, B32B 5/06, B32B 5/26, D04H 3/115

(54) **COMMINGLED FIBER PREFORM ARCHITECTURE FOR HIGH TEMPERATURE COMPOSITES**
MISCHFASER-VORFORMARCHITEKTUR FÜR HOCHTEMPERATUR-VERBUNDWERKSTOFFE
ARCHITECTURE DE PRÉFORMES EN FIBRES MÉLANGÉES POUR LES COMPOSITES À HAUTE TEMPÉRATURE

(30) Priority: 22.05.2023 US 202318321699
(43) Date of publication of application: 27.11.2024
(73) Proprietor: Goodrich Corporation, Charlotte, NC 28217-4578 (US)
(72) Inventor: WAUGH, Katherine E., San Diego (US); PUJAR, Vijay V., San Diego (US); KOROLY, Christopher C., Spring Valley (US); THAI, Bryan, Poway (US)
(74) Representative: Dehns

(56) References cited:
- US-A1- 2009 194 906
- US-A1- 2010 143 716
- US-A1- 2016 221 273
- US-A1- 2021 008 816
- US-A1- 2022 388 912
- US-B2- 10 926 488

## Description

### FIELD

The present disclosure relates generally to composite preform components and, more particularly, to a commingled fiber preform architecture for high temperature composites.

### BACKGROUND

Shaped composite bodies are utilized in aerospace applications. Various systems and methods are known in the art for forming a preform into a shaped composite body. In typical carbon-carbon manufacturing, a dry fabric may be used to make a preform. The dry preform is then densified using gas infiltration. There are many variables that determine the success of the densification stage, including the number of available pathways for the gas to infiltrate uniformly into the center of the preform.

US 2010/143716 A1 discloses a fixing thread for sewing together reinforcing fibers, in particular to form a fiber preform, for the production of a fiber-reinforced composite component by means of impregnation with a curable polymer material. According to the invention, the fixing thread has an interface for locally increasing the ductility of a matrix formed by the curable polymer material and has at least one core thread, so as in particular to reduce the tendency for microcracks to form in the matrix of the finished composite component in the regions where the fixing threads penetrate. The interface may be formed, for example, by an enclosure of the core thread by a thermoplastic polymer material, for example by polyethylene, polypropylene or the like.

US 2009/194906 A1 discloses a method of producing a non-crimp fabric and a non-crimp fabric comprising a layup of fabric plies stitched together by a thread, at least part of which is fusible. The method can include heating the stitched plies to soften or melt the fusible thread. The use of fusible thread can act as an in situ binder within the non-crimp fabric and tension created by the unfused stitching may create channels for matrix resin infusion during manufacture.

### SUMMARY

According to an aspect of the present invention, a commingled fiber preform is provided as recited in claim 1.

In various embodiments, the at least one first fabric layer and the second fabric layer comprise carbon fibers commingled with fusible fibers. In various embodiments, the at least one first fabric layer and the second fabric layer comprise carbon fibers commingled with fusible fibers and fugitive fibers. In various embodiments, a percentage of the carbon fibers and fugitive fibers in the commingled thread is each at least 10% by volume.

In various embodiments, the at least one first fabric layer and the second fabric layer comprise carbon fibers commingled with at least one of fusible fibers or fugitive fibers. In various embodiments, a percentage of the carbon fibers in the at least one first fabric layer and the second fabric layer exceeds a percentage of the fusible fibers or the fugitive fibers in the at least one first fabric layer and the second fabric layer. In various embodiments, at least one of the fusible fibers or the fugitive fibers are pyrolyzed from the commingled fiber preform. In various embodiments, the TTR is uniform throughout a length of the at least one first fabric layer and the second fabric layer. In various embodiments, the TTR is random throughout a length of the at least one first fabric layer and the second fabric layer.

In various embodiments, the at least one first fabric layer and the second fabric layer have directionality indicated by a tow in each of the at least one first fabric layer and the second fabric layer. In various embodiments, in positioning the second fabric layer on top of the at least one first fabric layer, the directionality is the same. In various embodiments, the at least one first fabric layer and the second fabric layer have directionality indicated by a tow in each of the at least one first fabric layer and the second fabric layer. In various embodiments, in positioning the second fabric layer on top of the at least one first fabric layer, the directionality differs.

According to an aspect of the present invention, a manufacturing method is provided as recited in claim 10.

In various embodiments, the at least one first fabric layer and the second fabric layer comprise carbon fibers commingled with fusible fibers. In various embodiments, the at least one first fabric layer and the second fabric layer comprise carbon fibers commingled with fusible fibers and fugitive fibers. In various embodiments, a percentage of the carbon fibers and fugitive fibers in the commingled thread is each at least 10% by volume.

In various embodiments, the at least one first fabric layer and the second fabric layer comprise carbon fibers commingled with at least one of fusible fibers or fugitive fibers. In various embodiments, a percentage of the carbon fibers in the at least one first fabric layer and the second fabric layer exceeds a percentage of the fusible fibers or the fugitive fibers in the at least one first fabric layer and the second fabric layer. In various embodiments, at least one of the fusible fibers or the fugitive fibers are pyrolyzed from the commingled fiber preform In various embodiments, the TTR is uniform throughout a length of the first fabric layer and the second fabric layer. In various embodiments, the TTR is random throughout a length of the at least one first fabric layer and the second fabric layer.

In various embodiments, the at least one first fabric layer and the second fabric layer have directionality indicated by a tow in each of the at least one first fabric layer and the second fabric layer. In various embodiments, in positioning the second fabric layer on top of the at least one first fabric layer, the directionality is the same. In various embodiments, the at least one first fabric layer and the second fabric layer have directionality indicated by a tow in each of the at least one first fabric layer and the second fabric layer. In various embodiments, in positioning the second fabric layer on top of the at least one first fabric layer, the directionality differs.

The present disclosure may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a fabric layer formed using commingled fibers including percentages of fugitive fibers, fusible fibers, and/or carbon fibers, in accordance with various embodiments.
FIGS. 2A and 2B illustrate a commingled fiber preform using commingled fiber fabric layers, in accordance with various embodiments.
FIGS. 3A and 3B illustrate a commingled fiber preform using commingled fiber fabric layers, in accordance with various embodiments.
FIG. 4 illustrates through thickness reinforcement (TTR) of a commingled fiber preform where a transport depth coincides with the number of fabric layers added to the preform, in accordance with various embodiments.
FIG. 5 illustrates through thickness reinforcement (TTR) of a commingled fiber preform where a transport depth of the TTR varies with regard to a number of fabric layers as well as length of the commingled fiber preform, in accordance with various embodiments.
FIG. 6 illustrates a multi-axial non-woven commingled fiber preform, in accordance with various embodiments.
FIGS. 7A, 7B, 7C, 7D, 7E, and7F illustrate a woven fabric for use as a fabric layer to be utilized in the embodiments of FIGS. 2A, 2B, 3A, 3B, 4, 5, and 6, in accordance with various embodiments.
FIG. 8 illustrates a method of forming a commingled fiber preform for a high temperature composite, in accordance with various embodiments.
FIG. 9 illustrates a method of forming a commingled fiber preform for a high temperature composite, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Various systems and methods are known in the art for generating a commingled fiber preform. Commingled fibers and yarn typically entangle thermoplastic or thermoset fibers with carbon, glass, or other reinforcement fibers to produce a low-cost, yet highly-flexible material utilized to manufacture components with complex geometries. In typical carbon-carbon manufacturing, a commingled fiber preform may be manufactured and this commingled fiber preform may then be densified using gas infiltration. There are many variables that determine the success of the densification stage, including the number of available pathways for the gas to infiltrate uniformly into the center of the commingled fiber preform. Typically, fiber volume and lack of adequate gas flow paths inhibit uniform densification and yield a component with less than 10 percent open porosity.

Disclosed herein are systems and methods for a commingled fiber preform architecture for high temperature composites that provides numerous pathways for fluids, i.e. uniform gas, infiltration into the center of the commingled fiber preform during densification. In various embodiments, commingled fibers using desired percentages of fugitive fibers, fusible fibers, and/or carbon fibers are fabricated into a fabric layers of either woven fabric layers, a non-crimp fabric layers, such as unidirectional or stitched unidirectional, or a felt fabric layers.

As used herein, a fusible fiber is comprised of one or more polymers with a combined char yield of 25% elemental carbon or greater by weight and a residual mass of less than 1% by weight. As used herein, a fugitive fiber is comprised of one or more polymers with a combined char yield of 5% elemental carbon or less by weight, and a residual mass of less than 1% by weight. As used herein, char yield is defined as the weight of the carbon remaining expressed as a percentage of the total starting weight of the fiber when the fiber material is heated (or pyrolyzed) in an inert atmosphere (e.g., nitrogen or argon) at temperatures of up to about 1000 degrees Celsius (about 1832 degrees Fahrenheit). As used herein, residual mass is defined as the weight of the fiber remaining expressed as a percentage of the total weight of the starting fiber when the fiber material is heated (or oxidized) in an oxidizing atmosphere (e.g., air, or oxygen) at temperatures of up to about 1000 degrees Celsius (about 1832 degrees Fahrenheit). It should be noted that while a residual mass of 1% or less is preferred in the production of carbon-carbon composite structures for high temperature applications, a residual mass of greater than 1% may be acceptable for certain lower temperature applications or in applications where the excessive residual mass and the associated residues do not adversely impact performance.

In various embodiments, carbon fibers may include a variety of carbon moduli but, for flexibility during preform lay-up, standard or intermediate modulus carbon fibers may be preferred. In various embodiments, carbon fibers are comprised of 85% of carbon by weight or greater. In various embodiments, fugitive fibers may include fibers without harmful byproducts that, responsive to being burned, burn under carbon-carbon processing temperatures, e.g. under 800 degrees Celsius (1472 degrees Fahrenheit). In that regard, fugitive fibers may be made of polyvinyl alcohol (PVA), polyethylene terephthalate (PET), nylon, polyethylene (PE), polyamide imide (PAI), or similar plastic, among others. In various embodiments, fusible fibers may include thermoplastic or polyimide fibers. In that regard, fusible fibers may include polyetheretherketone (PEEK), polyaryleetherketones (PAEK), polyetherketoneketone (PEKK), polyester imide (PEI), or similar polymers, among others. Other suitable polymers or combinations thereof may be used, without limitation.

In various embodiments, the fabric layers may then be stacked, in a near net shape tool, with each successive layer containing the desired fiber percentages of fugitive fibers, fusible fibers, and/or carbon fibers thereby forming a commingled fiber preform. In various embodiments, the fiber percentages may be varied such that interior plies of the commingled fiber preform may contain a higher percentage of carbon fibers and a lower percentage of fugitive fibers or fusible fibers while the exterior plies of the commingled fiber preform may conversely contain a lower percentage of carbon fibers and a higher percentage of fugitive fibers or fusible fibers. In various embodiments, during stacking, the fabric layers may be tacked together using a variety of methods, e.g. an adhesive tackifier, a hot iron to locally melt a thermoplastic, or an ultra-sonic thermoplastic welder, among others. In various embodiments, as the commingled fiber preform is stacked, the various fabric layers may be joined through thickness reinforcement (TTR) via needling, tufting, stitching, or z-pinning, using a commingled fiber thread that includes fugitive fibers, fusible fibers, and/or carbon fibers. In various embodiments, once all the fabric layers are stacked, then all the fabric layers are needled, tufted, stitched, or z-pinned together. In various embodiments, as each successive fabric layer is added, then the fabric layers may be needled, tufted, stitched, or z-pinned together. In various embodiments, the needling, tufting, stitching, or z-pinning may penetrate all the fabric layers. In various embodiments, the needling, tufting, stitching, or z-pinning may penetrate only a predefined number of fabric layers. In various embodiments, a number of fabric layers that are needled, tufted, stitched, or z-pinned may vary as the commingled fiber preform is generated. In various embodiments, once the commingled fiber preform is completely stacked and needled, the commingled fiber preform may be placed in a close die mold or vacuum bag tooling and subjected to heat and pressure to consolidate the commingled fiber preform, allowing the fusible and fugitive fibers to wet out, i.e. be completely coated, into the carbon-fiber and create a path through the thickness for infiltration of fluids.

In various embodiments, once consolidation is complete, the commingled fiber preform may undergo pyrolysis, or heat-treatment in an inert environment (pyrolysis may be alternatively referred to as pyrolyzation), where the fugitive fibers in the commingled fiber preform are burned, melted, or evaporated, and the fusible fibers decompose leaving behind a carbon char that forms the matrix. In various embodiments, once pyrolysis is complete, the commingled fiber preform may undergo Chemical Vapor Infiltration (CVI) densification. In various embodiments, once the CVI densification is complete, the commingled fiber preform may undergo skim cut machining where the surface of the commingled fiber preform is modified to meet a set of standards for the commingled fiber preform. In various embodiments, the pyrolysis, CVI densification and skim cutting may be repeated until a desired part density is reached. In various embodiments, once the desired part density is reached, a final machining may be performed on the commingled fiber preform to meet desired commingled fiber preform dimensions.

In various embodiments, once consolidation is complete, the commingled fiber preform may undergo polymer infiltration where a thermoset or thermoplastic resin such as phenolic or pitch is injected into the commingled fiber preform and then cured. In various embodiments, once the resin is cured, the commingled fiber preform may undergo pyrolysis where the fugitive fibers in the commingled fiber preform are burned, melted, or evaporated, and the fusible fibers are pyrolyzed into a carbon matrix. In various embodiments, once pyrolysis is complete, the commingled fiber preform may undergo further densification via Chemical Vapor Infiltration (CVI) densification. In various embodiments, once the CVI densification is complete, the commingled fiber preform may undergo skim cut machining where the surface of the commingled fiber preform is modified to meet a set of standards for the commingled fiber preform. In various embodiments, at least one of polymer infiltration, the pyrolysis, CVI densification and skim cutting may be repeated until a desired part density is reached. In various embodiments, once the desired part density is reached, a final machining may be performed on the commingled fiber preform to meet desired commingled fiber preform dimensions.

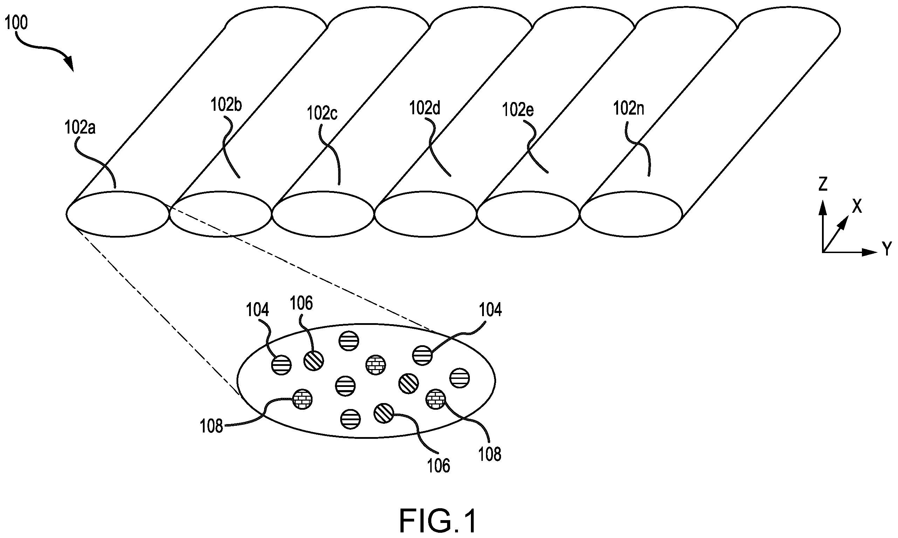

Referring now to FIG. 1, in accordance with various embodiments, a fabric layer formed using commingled fibers including percentages of fugitive fibers, fusible fibers, and/or carbon fibers is illustrated. In various embodiments, the fabric layer 100 includes a plurality of tows 102a-102n. In various embodiments, each tow of the plurality of tows 102a-102n includes a percentage of carbon fibers 104, fusible fibers 106, and fugitive fibers 108. In various embodiments, each tow of the plurality of tows 102a-102n includes only carbon fibers 104. In various embodiments, each tow of the plurality of tows 102a-102n includes carbon fibers 104 and either fusible fibers 106 or fugitive fibers 108. In various embodiments, each tow of the plurality of tows 102a-102n includes carbon fibers 104, fusible fibers 106, and fugitive fibers 108. In various embodiments, in a particular fabric layer 100, each tow of the plurality of tows 102a-102n includes the same percentage of carbon fibers 104, fusible fibers 106, and/or fugitive fibers 108. In various embodiments, in a particular fabric layer 100, one or more tows of the plurality of tows 102a-102n may include a different percentage of carbon fibers 104, fusible fibers 106, and/or fugitive fibers 108 than another one or more tows of the plurality of tows 102a-102n. In various embodiments, the fabric layer 100 has a directionality that coincides with the direction of the tows 102a-102n.

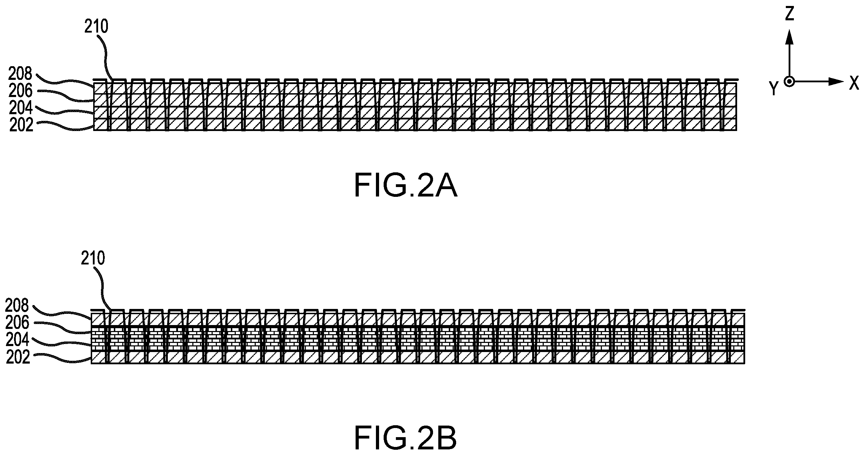

Referring now to FIGS. 2A and 2B, in accordance with various embodiments, a commingled fiber preform using commingled fiber fabric layers is illustrated. In various embodiments, as illustrated in FIG. 2A, each of fabric layers 202, 204, 206, and 208 may have consistent percentages of fugitive fibers, fusible fibers, and/or carbon fibers. In various embodiments, each of fabric layers 202, 204, 206, and 208 may include fugitive fibers and carbon fibers where a ratio of fugitive fibers to carbon fibers may be 1:2, 1:3, or 1:4, among others, as long as the carbon fiber percentage is larger than the fugitive fiber percentage. In various embodiments, each of fabric layers 202, 204, 206, and 208 may include fugitive fibers and fusible fibers, where a ratio of fugitive fibers to fusible fibers may be 1:2, 1:3, or 1:4, among others, as long as the fusible fiber percentage is larger than the fugitive fiber percentage. In various embodiments, each of fabric layers 202, 204, 206, and 208 may include fugitive fibers, carbon fibers, and fusible fibers, where a ratio of fugitive fibers to carbon fibers to fusible fibers may be 1:2:2, 1:3:2, 1:2:3, 1:3:3, or 1:4:2, among others, as long as the carbon fiber and fusible fiber percentages are larger than the fugitive fiber percentage. In various embodiments, as illustrated in FIG. 2B, fabric layers 202 and 208 may have a same percentage of fugitive fibers, fusible fibers, and/or carbon fibers and fabric layers 204 and 206, while having a same percentage of fugitive fibers, fusible fibers, and/or carbon fibers, may have a different percentage of fugitive fibers, fusible fibers, and/or carbon fibers from fabric layers 202 and 208. In various embodiments, once the desired number of layers has been reached for the preform ply stack, fabric layers 202, 204, 206, and 208 may be joined through thickness reinforcement (TTR) via external needling, tufting, stitching, or z-pinning, among others. In various embodiments, the TTR utilizes a commingled fiber thread 210 that includes fugitive fibers, fusible fibers, and/or carbon fibers. In various embodiments, commingled fiber thread 210 includes fugitive fibers and carbon fibers where a ratio of fugitive fibers to carbon fibers may be 1:2, 1:3, or 1:4, among others, as long as the carbon fiber percentage is larger than the fugitive fiber percentage. In various embodiments, commingled fiber thread 210 includes fugitive fibers and fusible fibers, where a ratio of fugitive fibers to fusible fibers may be 1:2, 1:3, or 1:4, among others, as long as the fusible fiber percentage is larger than the fugitive fiber percentage. In various embodiments, commingled fiber thread 210 includes fugitive fibers, carbon fibers, and fusible fibers, where a ratio of fugitive fibers to carbon fibers to fusible fibers may be 1:2:2, 1:3:2, 1:2:3, 1:3:3, or 1:4:2, among others, as long as the carbon fiber and fusible fiber percentages are larger than the fugitive fiber percentage. In various embodiments, the TTR is performed in a uniform manner such that a number of needles, tufts, stiches, or z-pins are consistent along a length of the fabric layers 202, 204, 206, and 208 in the x-direction. In various embodiments, a transport depth in the z-direction of the TTR is through all the fabric layers 202, 204, 206, and 208 of the commingled fiber preform for the length of the commingled fiber preform in the x-direction. In various embodiments, generating a commingled fiber preform in this manner takes advantage of random fugitive fiber placement for uniform densification in through thickness direction, while maintaining high in-plane strengths.

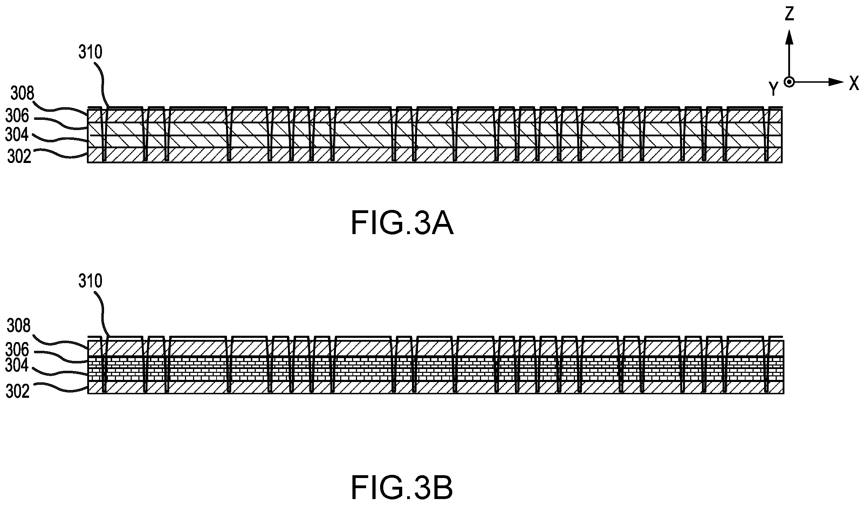

Referring now to FIGS. 3A and 3B, in accordance with various embodiments, a commingled fiber preform using commingled fiber fabric layers is illustrated. In various embodiments, as illustrated in FIG. 3A, each of fabric layers 302, 304, 306, and 308 may have a consistent percentage of fugitive fibers, fusible fibers, and/or carbon fibers. In various embodiments, each of fabric layers 302, 304, 306, and 308 may include fugitive fibers and carbon fibers where a ratio of fugitive fibers to carbon fibers may be 1:2, 1:3, or 1:4, among others, as long as the carbon fiber percentage is larger than the fugitive fiber percentage. In various embodiments, each of fabric layers 302, 304, 306, and 308 may include fugitive fibers and fusible fibers, where a ratio of fugitive fibers to fusible fibers may be 1:2, 1:3, or 1:4, among others, as long as the fusible fiber percentage is larger than the fugitive fiber percentage. In various embodiments, each of fabric layers 302, 304, 306, and 308 may include fugitive fibers, carbon fibers, and fusible fibers, where a ratio of fugitive fibers to carbon fibers to fusible fibers may be 1:2:2, 1:3:2, 1:2:3, 1:3:3, or 1:4:2, among others, as long as the carbon fiber and fusible fiber percentages are larger than the fugitive fiber percentage. In various embodiments, as illustrated in FIG. 3B, fabric layers 302 and 308 may have a same percentage of fugitive fibers, fusible fibers, and/or carbon fibers and fabric layers 304 and 306, while having a same percentage of fugitive fibers, fusible fibers, and/or carbon fibers, may have a different percentage of fugitive fibers, fusible fibers, and/or carbon fibers from fabric layers 302 and 308. In various embodiments, once the desired number of layers has been reached for the preform ply stack, fabric layers 302, 304, 306, and 308 may be joined through thickness reinforcement (TTR) via external needling, tufting, stitching, or z-pinning, among others. In various embodiments, the TTR utilizes a commingled fiber thread 310 that includes fugitive fibers, fusible fibers, and/or carbon fibers. In various embodiments, commingled fiber thread 310 includes fugitive fibers and carbon fibers, where a ratio of fugitive fibers to carbon fibers may be 1:2, 1:3, or 1:4, among others, as long as the carbon fiber percentage is larger than the fugitive fiber percentage. In various embodiments, commingled fiber thread 310 includes fugitive fibers and fusible fibers, where a ratio of fugitive fibers to fusible fibers may be 1:2, 1:3, or 1:4, among others, as long as the fusible fiber percentage is larger than the fugitive fiber percentage. In various embodiments, commingled fiber thread 310 includes fugitive fibers, carbon fibers, and fusible fibers, where a ratio of fugitive fibers to carbon fibers to fusible fibers may be 1:2:2, 1:3:2, 1:2:3, 1:3:3, or 1:4:2, among others, as long as the carbon fiber and fusible fiber percentages are larger than the fugitive fiber percentage. In various embodiments, the through thickness reinforcement (TTR) is performed in a random manner such that a number of needles, tufts, stiches, or z-pins vary along a length of the fabric layers 202, 204, 206, and 208 in the x-direction. In various embodiments, a transport depth in the z-direction of the TTR is though all of the fabric layers 202, 204, 206, and 208 of the commingled fiber preform for the length of the commingled fiber preform in the x-direction. In various embodiments, generating a commingled fiber preform in this manner takes advantage of random fugitive fiber placement for uniform densification.

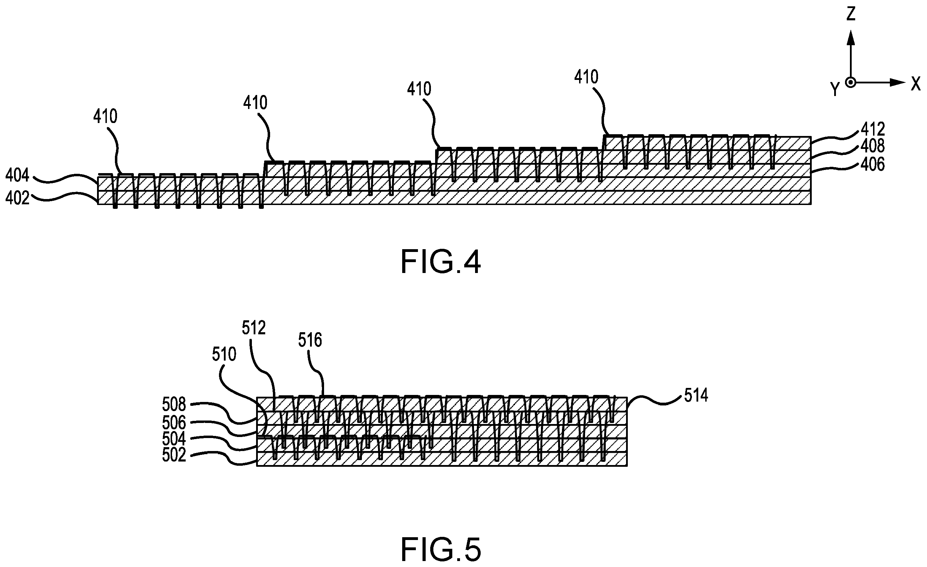

Referring now to FIG. 4, in accordance with various embodiments, through thickness reinforcement (TTR) of a commingled fiber preform where a transport depth coincides with the number of fabric layers added to the commingled fiber preform is illustrated. In various embodiments, a transport depth in the z-direction of the TTR only penetrates a current fabric layer and an immediate previous fabric layer. In that regard, responsive to fabric layer 404 being laid on top of fabric layer 402, the TTR using commingled fiber thread 410 penetrates the fabric layer 404 and fabric layer 402. Responsive to fabric layer 406 being laid on top of fabric layer 404, the TTR using commingled fiber thread 410 penetrates only fabric layer 406 and fabric layer 404. Responsive to fabric layer 408 being laid on top of fabric layer 406, the TTR using commingled fiber thread 410 penetrates only fabric layer 408 and fabric layer 406. Responsive to fabric layer 412 being laid on top of fabric layer 408, the TTR using commingled fiber thread 410 penetrates only fabric layer 412 and fabric layer 408. In various embodiments, the TTR utilizes a commingled fiber thread 410 that includes fugitive fibers, fusible fibers, and/or carbon fibers. In various embodiments, commingled fiber thread 410 includes fugitive fibers and carbon fibers. In various embodiments, commingled fiber thread 410 includes fugitive fibers and fusible fibers. In various embodiments, commingled fiber thread 410 includes fugitive fibers, carbon fibers, and fusible fibers.

Referring now to FIG. 5, in accordance with various embodiments, through thickness reinforcement (TTR) of a commingled fiber preform where a transport depth of the TTR varies with regard to a number of fabric layers as well as length of the commingled fiber preform is illustrated. In various embodiments, responsive to fabric layer 504 being laid on top of fabric layer 502, the TTR using commingled fiber thread 510 penetrates completely through a thickness of the fabric layer 504 and partially through a thickness of fabric layer 502 but only for a portion of the length of the commingled fiber preform in the x-direction. Responsive to fabric layer 506 being laid on top of fabric layer 504 and then fabric layer 508 being laid on top of fabric layer 506, the TTR using commingled fiber thread 512 penetrates completely through a thickness of the fabric layers 508 and 506 and partially through a thickness of the fabric layer 504 for a first portion of the length of the commingled fiber preform in the x-direction and then penetrates completely through a thickness of fabric layers 508, 506, and 504 and partially through a thickness of fabric layer 502 for a second portion of the length of the commingled fiber preform in the x-direction. Responsive to fabric layer 514 being laid on top of fabric layer 508, the TTR using commingled fiber thread 516 penetrates completely through a thickness of fabric layer 514 and partially though a thickness of fabric layer 508 for the first portion and the second portion of the length of the commingled fiber preform in the x-direction. In various embodiments, the commingled fiber threads 510, 512, and 516 may include fugitive fibers, fusible fibers, and/or carbon fibers. In various embodiments, the commingled fiber threads 510, 512, and 516 may include fugitive fibers and carbon fibers. In various embodiments, the commingled fiber threads 510, 512, and 516 may include fugitive fibers and fusible fibers. In various embodiments, the commingled fiber threads 510, 512, and 516 may include fugitive fibers, carbon fibers, and fusible fibers. In various embodiments, generating a commingled fiber preform in this manner takes advantage of random fugitive fiber placement for targeted densification in through thickness direction, while maintaining high in-plane strengths.

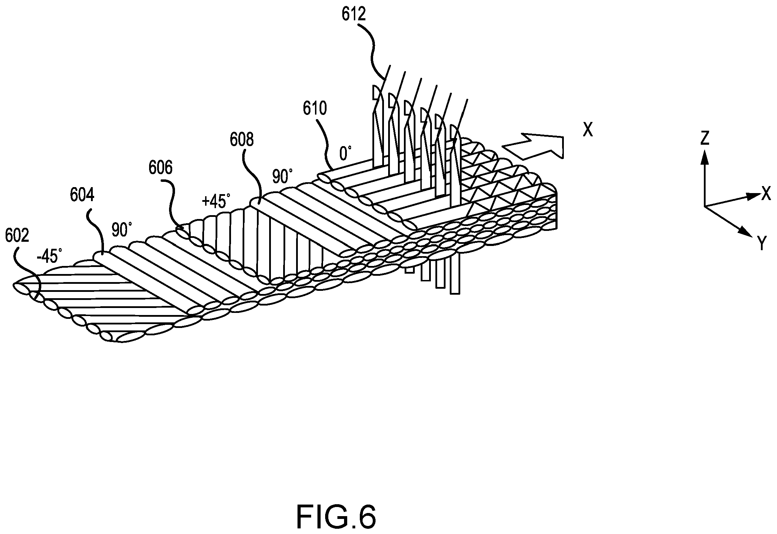

Referring now to FIG. 6, in accordance with various embodiments, a multi-axial non-woven commingled fiber preform is illustrated. In various embodiments, the multi-axial non-woven commingled fiber preform 600 includes a first fabric layer 602 positioned such that its directionality, which coincides with the direction of the tows, is at a first angle, i.e. -45 degrees with respect to the x-axis. In various embodiments, a second fabric layer 604 is laid on top of the first fabric layer 602 and positioned such that its directionality is at a second angle, i.e. 90 degrees with respect to the x-axis. In various embodiments, a third fabric layer 606 is laid on top of the second fabric layer 604 and positioned such that its directionality is at a third angle, i.e. +45 degrees with respect to the x-axis. In various embodiments, a fourth fabric layer 608 is laid on top of the third fabric layer 609 and positioned such that its directionality is at the second angle, i.e. 90 degrees with respect to the x-axis. In various embodiments, a fifth fabric layer 610 is laid on top of the fourth fabric layer 608 and positioned such that its directionality is at a fourth angle, i.e. 0 degrees with respect to the x-axis. In various embodiments, the multi-axial non-woven commingled fiber preform 600 that includes fabric layers 602-610 provides for each fabric layer to be tailored dependent on the location within the commingled fiber preform and whether high or low warp strength is required. In various embodiments, the multi-axial non-woven commingled fiber preform 600 is ideal for complex shapes which may require laying up on complex contour surfaces, where warp strength differentials may be preferred, which allows for the tailoring of in-plane strengths in certain directions and in certain regions. In various embodiments, once the multi-axial non-woven commingled fiber preform 600 that includes fabric layers 602-610 is laid up, the multi-axial non-woven commingled fiber preform undergoes through thickness reinforcement (TTR) such as the TTR described in FIGS. 2A, 2B, 3A, 3B, 4, and 5. In various embodiments, the TTR utilizes a commingled fiber thread 612 that includes fugitive fibers, fusible fibers, and/or carbon fibers. In various embodiments, commingled fiber thread 612 includes fugitive fibers and carbon fibers. In various embodiments, commingled fiber thread 612 includes fugitive fibers and fusible fibers. In various embodiments, commingled fiber thread 612 includes fugitive fibers, carbon fibers, and fusible fibers.

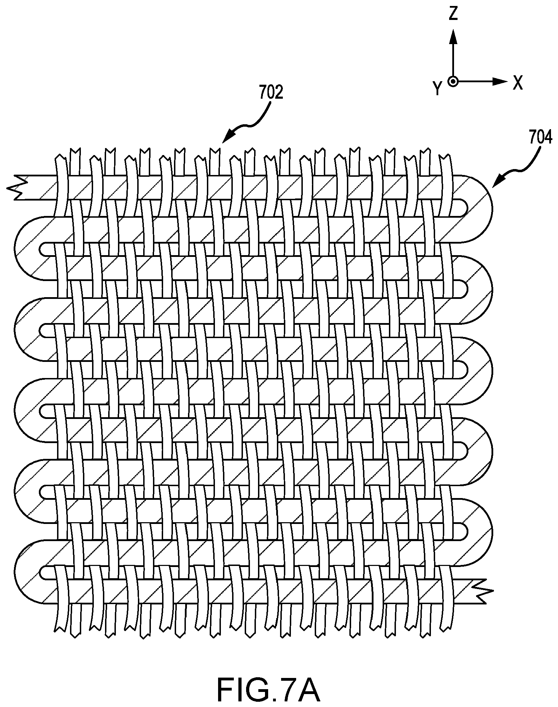

Referring now to FIGS. 7A-7F, in accordance with various embodiments, a woven fabric for use as a fabric layer to be utilized in the embodiments of FIGS. 2A, 2B, 3A, 3B, 4, 5, and 6 is illustrated. In various embodiments, commingled fibers in the warp direction, i.e. in the y-direction may include fugitive fibers, fusible fibers, and/or carbon fibers. Likewise, in various embodiments, commingled fibers in the warp direction, i.e. in the x-direction may also include fugitive fibers, fusible fibers, and/or carbon fibers. In that regard, in various embodiments, commingled fibers in the warp or weft directions may include fugitive fibers and carbon fibers where a ratio of fugitive fibers to carbon fibers may be 1:2, 1:3, or 1:4, among others, as long as the carbon fiber percentage is larger than the fugitive fiber percentage. In various embodiments, commingled fibers in the warp or weft directions may include fugitive fibers and fusible fibers, where a ratio of fugitive fibers to fusible fibers may be 1:2, 1:3, or 1:4, among others, as long as the fusible fiber percentage is larger than the fugitive fiber percentage. In various embodiments, commingled fibers in the warp or weft directions may include fugitive fibers, carbon fibers, and fusible fibers, where a ratio of fugitive fibers to carbon fibers to fusible fibers may be 1:2:2, 1:3:2, 1:2:3, 1:3:3, or 1:4:2, among others, as long as the carbon fiber and fusible fiber percentages are larger than the fugitive fiber percentage.

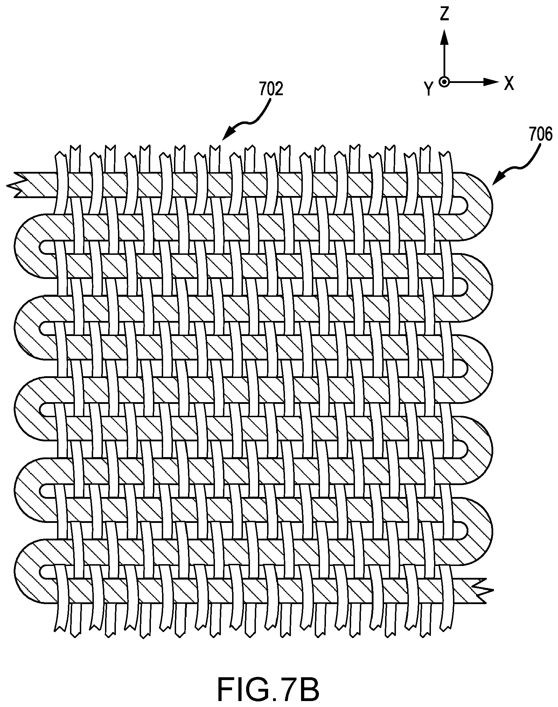

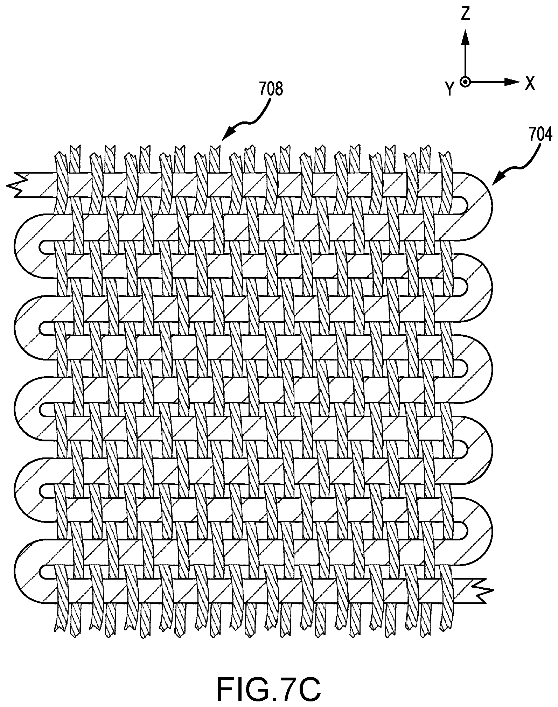

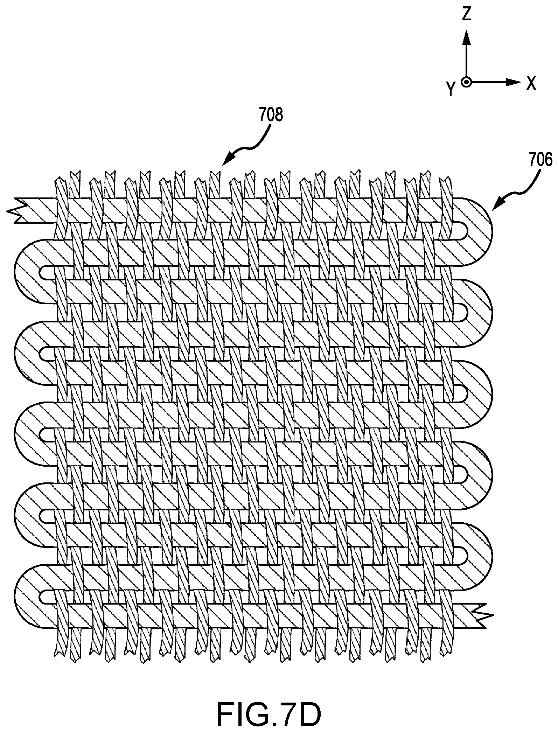

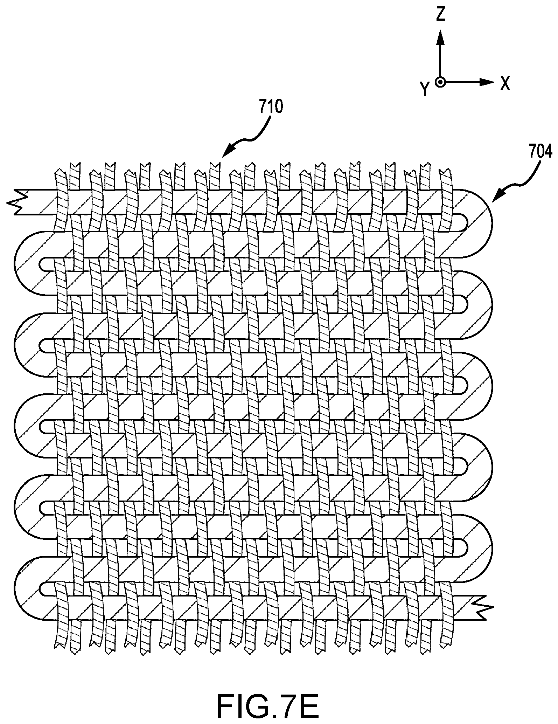

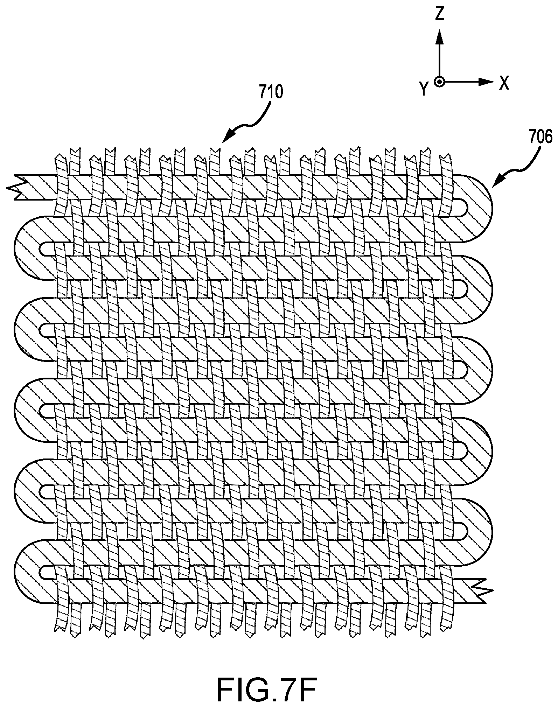

In FIG. 7A, the commingled fibers 702 in the warp direction include fusible fibers and fugitive fibers and the commingled fibers 704 in the weft direction include only carbon fibers. In FIG. 7B, the commingled fibers 702 in the warp direction include fusible fibers and fugitive fibers and the commingled fibers 706 in the weft direction include carbon fibers and fusible fibers. In FIG. 7C, the commingled fibers 708 in the warp direction include carbon fibers and fugitive fibers and the commingled fibers 704 in the weft direction include only carbon fibers. In FIG. 7D, the commingled fibers 708 in the warp direction include carbon fibers and fugitive fibers and the commingled fibers 706 in the weft direction include carbon fibers and fusible fibers. In FIG. 7E, the commingled fibers 710 in the warp direction include carbon fibers, fusible fibers, and fugitive fibers and the commingled fibers 704 in the weft direction include only carbon fibers. In FIG. 7F, the commingled fibers 710 in the warp direction include carbon fibers, fusible fibers, and fugitive fibers and the commingled fibers 706 in the weft direction include carbon fibers and fusible fibers. In various embodiments, tailoring of in-plane strengths of the fabric layer in certain directions, may result in the creation of a quasi-unidirectional fabric layer in a finished composite. In various embodiments, changing the mix of carbon fibers and fusible fibers in the weft directions may provide for an advantageous strength differential between warp and weft directions.

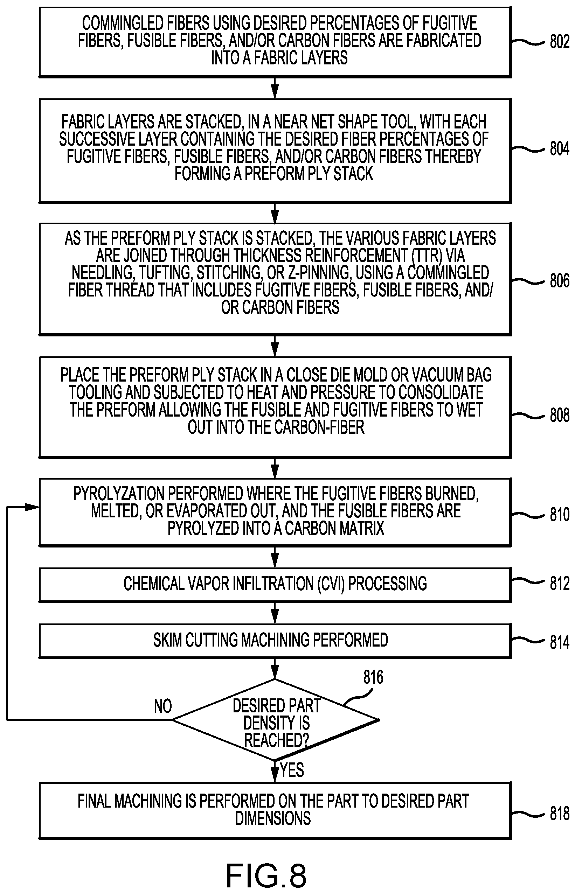

Referring now to FIG. 8, in accordance with various embodiments, a method of forming a commingled fiber preform for a high temperature composite is illustrated. At block 802, commingled fibers using desired percentages of fugitive fibers, fusible fibers, and/or carbon fibers are fabricated into a fabric layers of either woven fabric layers, a non-crimp fabric layers, such as unidirectional or stitched unidirectional, or a felt fabric layers. At block 804, the fabric layers are stacked, in a near net shape tool, with each successive layer containing the desired fiber percentages of fugitive fibers, fusible fibers, and/or carbon fibers thereby forming a commingled fiber preform. At block 806, as the commingled fiber preform is stacked, the various fabric layers may be joined through thickness reinforcement (TTR) via needling, tufting, stitching, or z-pinning, using a commingled fiber thread that includes fugitive fibers, fusible fibers, and/or carbon fibers. At block 808, once the commingled fiber preform is completely stacked and needled, the commingled fiber preform may be placed in a close die mold or vacuum bag tooling and subjected to heat and pressure to consolidate the commingled fiber preform allowing the fusible and fugitive fibers to wet out into the carbon fiber and create a path through the thickness for infiltration of fluids.

At block 810, once consolidation is complete, the commingled fiber preform undergoes pyrolysis where the fugitive fibers in the commingled fiber preform are burned, melted, or evaporated, and the fusible fibers are pyrolyzed into a carbon matrix. At block 812, once pyrolysis is complete, the commingled fiber preform may undergo Chemical Vapor Infiltration (CVI) densification. At block 814, once the CVI densification is complete, the commingled fiber preform may undergo skim cut machining where the surface of the commingled fiber preform modified to meet a set of standards for the commingled fiber preform. At block 816 a determination is made as to whether a desired part density is reached. If at block 816 the desired part density has not been reached, the operation returns to block 810. If at block 816 the desired part density has been reached, then, at block 818, a final machining may be performed on the commingled fiber preform to meet desired commingled fiber preform dimensions.

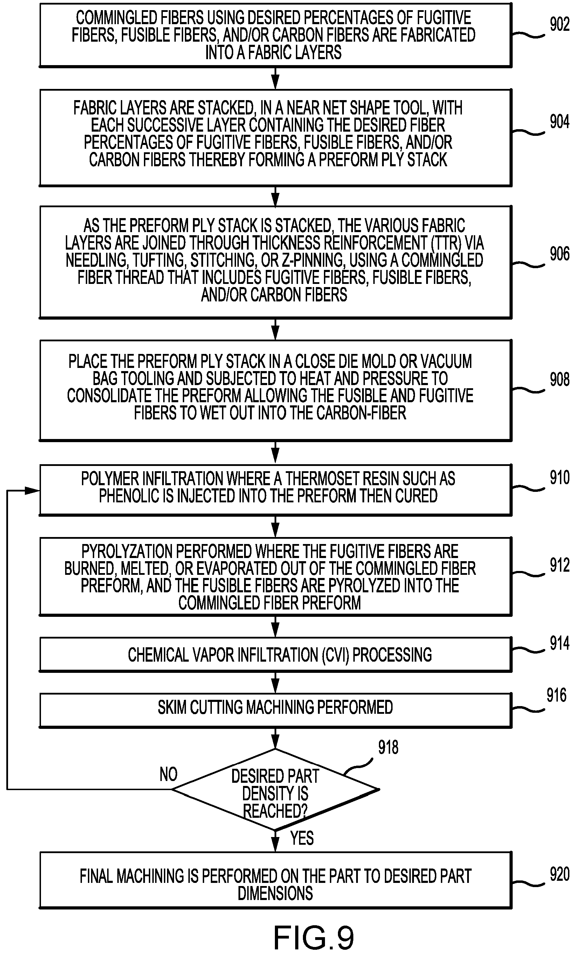

Referring now to FIG. 9, in accordance with various embodiments, a method of forming a commingled fiber preform for a high temperature composite is illustrated. At block 902, commingled fibers using desired percentages of fugitive fibers, fusible fibers, and/or carbon fibers are fabricated into a fabric layers of either woven fabric layers, a non-crimp fabric layers, such as unidirectional or stitched unidirectional, or a felt fabric layers. At block 904, the fabric layers are stacked, in a near net shape tool, with each successive layer containing the desired fiber percentages of fugitive fibers, fusible fibers, and/or carbon fibers thereby forming a commingled fiber preform. At block 906, as the commingled fiber preform is stacked, the various fabric layers may be joined through thickness reinforcement (TTR) via needling, tufting, stitching, or z-pinning, using a commingled fiber thread that includes fugitive fibers, fusible fibers, and/or carbon fibers. At block 908, once the commingled fiber preform is completely stacked and needled, the commingled fiber preform may be placed in a close die mold or vacuum bag tooling and subjected to heat and pressure to consolidate the commingled fiber preform allowing the fusible and fugitive fibers to wet out into the carbon fiber and create a path through the thickness for infiltration of fluids.

At block 910, once consolidation is complete, the commingled fiber preform may undergo polymer infiltration where a thermoset resin, i.e. fluids, such as phenolic is injected into the commingled fiber preform and then cured. At block 912, once the thermoset resin is cured, the commingled fiber preform undergoes pyrolysis where the fugitive fibers in the commingled fiber preform are burned, melted, or evaporated out, and the fusible fibers are pyrolyzed into a carbon matrix. At block 914, once pyrolysis is complete, the commingled fiber preform may undergo Chemical Vapor Infiltration (CVI) densification. At block 916, once the CVI densification is complete, the commingled fiber preform may undergo skim cut machining where the surface of the commingled fiber preform modified to meet a set of standards for the commingled fiber preform. At block 918 a determination is made as to whether a desired part density is reached. If at block 918 the desired part density has not been reached, the operation returns to block 910. If at block 918 the desired part density has been reached, then, at block 920, a final machining may be performed on the commingled fiber preform to meet desired commingled fiber preform dimensions.

In various embodiments, once consolidation is complete, the commingled fiber preform may undergo polymer infiltration where a thermoset resin such as phenolic is injected into the commingled fiber preform and then cured. In various embodiments, once the thermoset resin is cured, the commingled fiber preform may undergo pyrolysis where the fugitive fibers in the commingled fiber preform are burned, melted, or evaporated out, and the fusible fibers are pyrolyzed into a carbon matrix. In various embodiments, once pyrolysis is complete, the commingled fiber preform may undergoes Chemical Vapor Infiltration (CVI) densification. In various embodiments, once the CVI densification is complete, the commingled fiber preform may undergo skim cut machining where the surface of the commingled fiber preform modified to meet a set of standards for the commingled fiber preform. In various embodiments, the polymer infiltration, the pyrolysis, CVI densification and skim cutting may be repeated until a desired part density is reached. In various embodiments, once the desired part density is reached, a final machining may be performed on the commingled fiber preform to meet desired commingled fiber preform dimensions.

Therefore, the illustrative embodiments provide for the creation of complex contour fibrous preforms, with a variety of thicknesses, which take advantage of commingled fibers. Carbon and fugitive commingled fibers enable the commingled fiber preform to take advantage of high strength properties from the carbon fibers, and yield more uniform densification than traditional carbon fiber preforms. The addition of carbon and fusible commingled fibers enable higher densification yields in thick sections or complex contour geometries.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A commingled fiber preform comprising:
at least one first fabric layer (408); and
a second fabric layer (412),
wherein the second fabric layer (412) is positioned on top of the at least one first fabric layer (408),
wherein the second fabric layer (412) is joined to the at least one first fabric layer (408) via through thickness reinforcement (TTR) using a commingled thread (410),
wherein a transport depth of the TTR penetrates completely through a thickness of the second fabric layer (412) and an entirety of the at least one first fabric layer (408),
wherein the commingled thread (410) comprises carbon fibers commingled with fugitive fibers and fusible fibers,
wherein the fugitive fibers are configured to be pyrolyzed from the commingled fiber preform to create a path through the thickness for infiltration of fluids,
wherein the fugitive fibers are comprised of one or more polymers with a combined char yield of 5% elemental carbon or less by weight, and a residual mass of less than 1% by weight, and
wherein the fusible fibers are comprised of one or more polymers with a combined char yield of 25% elemental carbon or greater by weight and a residual mass of less than 1% by weight.

2. The commingled fiber preform of claim 1, wherein the at least one first fabric layer (408) and the second fabric layer (412) comprise carbon fibers commingled with fusible fibers.

3. The commingled fiber preform of claim 1, wherein the at least one first fabric layer (408) and the second fabric layer (412) comprise carbon fibers commingled with fusible fibers and fugitive fibers.

4. The commingled fiber preform of claim 1, 2 or 3, wherein a percentage of the carbon fibers and fugitive fibers in the commingled thread is each at least 10% by volume.

5. The commingled fiber preform of claim 1, wherein the at least one first fabric layer (408) and the second fabric layer (412) comprise carbon fibers commingled with at least one of fusible fibers or fugitive fibers, wherein a percentage of the carbon fibers in the at least one first fabric layer (408) and the second fabric layer (412) exceeds a percentage of the fusible fibers or the fugitive fibers in the at least one first fabric layer (408) and the second fabric layer (412), and wherein at least one of the fusible fibers or the fugitive fibers are pyrolyzed from the commingled fiber preform.

6. The commingled fiber preform of any preceding claim, wherein the TTR is uniform throughout a length of the at least one first fabric layer (408) and the second fabric layer (412).

7. The commingled fiber preform of any of claims 1 to 5, wherein the TTR is random throughout a length of the at least one first fabric layer (408) and the second fabric layer (412).

8. The commingled fiber preform of any preceding claim, wherein the at least one first fabric layer (408) and the second fabric layer (412) have directionality indicated by a tow in each of the at least one first fabric layer (408) and the second fabric layer (412) and wherein, in positioning the second fabric layer (412) on top of the at least one first fabric layer (408), the directionality is the same.

9. The commingled fiber preform of any of claims 1 to 7, wherein the at least one first fabric layer (408) and the second fabric layer (412) have directionality indicated by a tow in each of the at least one first fabric layer (408) and the second fabric layer (412) and wherein, in positioning the second fabric layer (412) on top of the at least one first fabric layer (408), the directionality differs.

10. A manufacturing method, comprising:
forming a commingled fiber preform by:
arranging a second fabric layer (412) on top of at least one first fabric layer (408); and
joining the second fabric layer (412) to the at least one first fabric layer (408) via through thickness reinforcement (TTR) using a commingled thread (410),
wherein a transport depth of the TTR penetrates completely through a thickness of the second fabric layer (412) and an entirety of the at least one first fabric layer (408),
wherein the commingled thread (410) comprises carbon fibers commingled with fugitive fibers and fusible fibers, and
wherein the fugitive fibers are pyrolyzed from the commingled fiber preform to create a path through the thickness for infiltration of fluids,
wherein the fugitive fibers are comprised of one or more polymers with a combined char yield of 5% elemental carbon or less by weight, and a residual mass of less than 1% by weight, and wherein the fusible fibers are comprised of one or more polymers with a combined char yield of 25% elemental carbon or greater by weight and a residual mass of less than 1% by weight.

11. The manufacturing method of claim 10, wherein the at least one first fabric layer (408) and the second fabric layer (412) comprise carbon fibers commingled with fusible fibers; or
wherein the at least one first fabric layer (408) and the second fabric layer (412) comprise carbon fibers commingled with fusible fibers and fugitive fibers.

12. The manufacturing method of claim 10 or 11, wherein a percentage of the carbon fibers and fugitive fibers in the commingled thread is each at least 10% by volume.

13. The manufacturing method of claim10, 11 or 12, wherein the TTR is uniform throughout a length of the at least one first fabric layer (408) and the second fabric layer (412).

14. The manufacturing method of claim 10, 11 or 12, wherein the TTR is random throughout a length of the at least one first fabric layer (408) and the second fabric layer (412).

15. The manufacturing method of any of claims 11 to 14, wherein the at least one first fabric layer (408) and the second fabric layer (412) comprise carbon fibers commingled with at least one of fusible fibers or fugitive fibers, wherein a percentage of the carbon fibers in the at least one first fabric layer (408) and the second fabric layer (412) exceeds a percentage of the fusible fibers or the fugitive fibers in the at least one first fabric layer (408) and the second fabric layer (412), and wherein at least one of the fusible fibers or the fugitive fibers are pyrolyzed from the commingled fiber preform; and/or
wherein the at least one first fabric layer (408) and the second fabric layer (412) have directionality indicated by a tow in each of the at least one first fabric layer (408) and the second fabric layer (412) and wherein, in positioning the second fabric layer (412) on top of the at least one first fabric layer (408), the directionality is the same; or wherein the at least one first fabric layer (408) and the second fabric layer (412) have directionality indicated by a tow in each of the at least one first fabric layer (408) and the second fabric layer (412) and wherein, in positioning the second fabric layer (412) on top of the at least one first fabric layer (408), the directionality differs.

## Patentansprüche

1. Eine ineinandergemischte Faservorform, umfassend:
mindestens eine erste Gewebeschicht (408); und
eine zweite Gewebeschicht (412),
wobei die zweite Gewebeschicht (412) auf der mindestens einen ersten Gewebeschicht (408) angeordnet ist,
wobei die zweite Gewebeschicht (412) mit der mindestens einen ersten Gewebeschicht (408) über eine Durchdickenverstärkung (TTR) mittels eines ineinandergemischten Fadens (410) verbunden ist,
wobei eine Transporttiefe der TTR vollständig durch eine Dicke der zweiten Gewebeschicht (412) und die gesamte mindestens eine erste Gewebeschicht (408) hindurchdringt,
wobei der ineinandergemischte Faden (410) Kohlenstofffasern umfasst, die mit Fugitivfasern und schmelzbaren Fasern ineinandergemischt sind,
wobei die Fugitivfasern dazu ausgelegt sind, aus der ineinandergemischten Faservorform pyrolysiert zu werden, um einen Pfad durch die Dicke für die Infiltration von Fluiden zu schaffen,
wobei die Fugitivfasern aus einem oder mehreren Polymeren mit einer kombinierten Verkohlungsausbeute von 5 % elementarem Kohlenstoff oder weniger nach Gewicht und einer Restmasse von weniger als 1 % nach Gewicht bestehen, und
wobei die schmelzbaren Fasern aus einem oder mehreren Polymeren mit einer kombinierten Verkohlungsausbeute von 25 % elementarem Kohlenstoff oder mehr nach Gewicht und einer Restmasse von weniger als 1 % nach Gewicht bestehen.

2. Die ineinandergemischte Faservorform nach Anspruch 1, wobei die mindestens eine erste Gewebeschicht (408) und die zweite Gewebeschicht (412) Kohlenstofffasern umfassen, die mit schmelzbaren Fasern ineinandergemischt sind.

3. Die ineinandergemischte Faservorform nach Anspruch 1, wobei die mindestens eine erste Gewebeschicht (408) und die zweite Gewebeschicht (412) Kohlenstofffasern umfassen, die mit schmelzbaren Fasern und Fugitivfasern ineinandergemischt sind.

4. Die ineinandergemischte Faservorform nach Anspruch 1, 2 oder 3, wobei ein Prozentsatz der Kohlenstofffasern und Fugitivfasern in dem ineinandergemischten Faden jeweils mindestens 10 % nach Volumen beträgt.

5. Die ineinandergemischte Faservorform nach Anspruch 1, wobei die mindestens eine erste Gewebeschicht (408) und die zweite Gewebeschicht (412) Kohlenstofffasern umfassen, die mit mindestens einem von schmelzbaren Fasern oder Fugitivfasern ineinandergemischt sind, wobei ein Prozentsatz der Kohlenstofffasern in der mindestens einen ersten Gewebeschicht (408) und der zweiten Gewebeschicht (412) einen Prozentsatz der schmelzbaren Fasern oder der Fugitivfasern in der mindestens einen ersten Gewebeschicht (408) und der zweiten Gewebeschicht (412) übersteigt, und wobei mindestens eine der schmelzbaren Fasern oder der Fugitivfasern aus der ineinandergemischten Faservorform pyrolysiert werden.

6. Die ineinandergemischte Faservorform nach einem der vorhergehenden Ansprüche, wobei die TTR über eine Länge der mindestens einen ersten Gewebeschicht (408) und der zweiten Gewebeschicht (412) gleichmäßig ist.

7. Die ineinandergemischte Faservorform nach einem der Ansprüche 1 bis 5, wobei die TTR über eine Länge der mindestens einen ersten Gewebeschicht (408) und der zweiten Gewebeschicht (412) zufällig ist.

8. Die ineinandergemischte Faservorform nach einem der vorhergehenden Ansprüche, wobei die mindestens eine erste Gewebeschicht (408) und die zweite Gewebeschicht (412) eine Richtungsabhängigkeit aufweisen, die durch einen Faserstrang in jeder der mindestens einen ersten Gewebeschicht (408) und der zweiten Gewebeschicht (412) angezeigt wird, und wobei bei der Positionierung der zweiten Gewebeschicht (412) auf der mindestens einen ersten Gewebeschicht (408) die Richtungsabhängigkeit gleich ist.

9. Die ineinandergemischte Faservorform nach einem der Ansprüche 1 bis 7, wobei die mindestens eine erste Gewebeschicht (408) und die zweite Gewebeschicht (412) eine Richtungsabhängigkeit aufweisen, die durch einen Faserstrang in jeder der mindestens einen ersten Gewebeschicht (408) und der zweiten Gewebeschicht (412) angezeigt wird, und wobei bei der Positionierung der zweiten Gewebeschicht (412) auf der mindestens einen ersten Gewebeschicht (408) die Richtungsabhängigkeit abweicht.

10. Ein Herstellungsverfahren, umfassend:
Bilden einer ineinandergemischten Faservorform durch:
Anordnen einer zweiten Gewebeschicht (412) auf mindestens einer ersten Gewebeschicht (408); und
Verbinden der zweiten Gewebeschicht (412) mit der mindestens einen ersten Gewebeschicht (408) über eine Durchdickenverstärkung (TTR) mittels eines ineinandergemischten Fadens (410),
wobei eine Transporttiefe der TTR vollständig durch eine Dicke der zweiten Gewebeschicht (412) und die gesamte mindestens eine erste Gewebeschicht (408) hindurchdringt,
wobei der ineinandergemischte Faden (410) Kohlenstofffasern umfasst, die mit Fugitivfasern und schmelzbaren Fasern ineinandergemischt sind, und
wobei die Fugitivfasern aus der ineinandergemischten Faservorform pyrolysiert werden, um einen Pfad durch die Dicke für die Infiltration von Fluiden zu schaffen,
wobei die Fugitivfasern aus einem oder mehreren Polymeren mit einer kombinierten Verkohlungsausbeute von 5 % elementarem Kohlenstoff oder weniger nach Gewicht und einer Restmasse von weniger als 1 % nach Gewicht bestehen, und wobei die schmelzbaren Fasern aus einem oder mehreren Polymeren mit einer kombinierten Verkohlungsausbeute von 25 % elementarem Kohlenstoff oder mehr nach Gewicht und einer Restmasse von weniger als 1 % nach Gewicht bestehen.

11. Das Herstellungsverfahren nach Anspruch 10, wobei die mindestens eine erste Gewebeschicht (408) und die zweite Gewebeschicht (412) Kohlenstofffasern umfassen, die mit schmelzbaren Fasern ineinandergemischt sind; oder
wobei die mindestens eine erste Gewebeschicht (408) und die zweite Gewebeschicht (412) Kohlenstofffasern umfassen, die mit schmelzbaren Fasern und Fugitivfasern ineinandergemischt sind.

12. Das Herstellungsverfahren nach Anspruch 10 oder 11, wobei ein Prozentsatz der Kohlenstofffasern und Fugitivfasern in dem ineinandergemischten Faden jeweils mindestens 10 % nach Volumen beträgt.

13. Das Herstellungsverfahren nach Anspruch 10, 11 oder 12, wobei die TTR über eine Länge der mindestens einen ersten Gewebeschicht (408) und der zweiten Gewebeschicht (412) gleichmäßig ist.

14. Das Herstellungsverfahren nach Anspruch 10, 11 oder 12, wobei die TTR über eine Länge der mindestens einen ersten Gewebeschicht (408) und der zweiten Gewebeschicht (412) zufällig ist.

15. Das Herstellungsverfahren nach einem der Ansprüche 11 bis 14, wobei die mindestens eine erste Gewebeschicht (408) und die zweite Gewebeschicht (412) Kohlenstofffasern umfassen, die mit mindestens einem von schmelzbaren Fasern oder Fugitivfasern ineinandergemischt sind, wobei ein Prozentsatz der Kohlenstofffasern in der mindestens einen ersten Gewebeschicht (408) und der zweiten Gewebeschicht (412) einen Prozentsatz der schmelzbaren Fasern oder der Fugitivfasern in der mindestens einen ersten Gewebeschicht (408) und der zweiten Gewebeschicht (412) übersteigt, und wobei mindestens eine der schmelzbaren Fasern oder der Fugitivfasern aus der ineinandergemischten Faservorform pyrolysiert werden; und/oder
wobei die mindestens eine erste Gewebeschicht (408) und die zweite Gewebeschicht (412) eine Richtungsabhängigkeit aufweisen, die durch einen Faserstrang in jeder der mindestens einen ersten Gewebeschicht (408) und der zweiten Gewebeschicht (412) angezeigt wird, und wobei bei der Positionierung der zweiten Gewebeschicht (412) auf der mindestens einen ersten Gewebeschicht (408) die Richtungsabhängigkeit gleich ist; oder wobei die mindestens eine erste Gewebeschicht (408) und die zweite Gewebeschicht (412) eine Richtungsabhängigkeit aufweisen, die durch einen Faserstrang in jeder der mindestens einen ersten Gewebeschicht (408) und der zweiten Gewebeschicht (412) angezeigt wird, und wobei bei der Positionierung der zweiten Gewebeschicht (412) auf der mindestens einen ersten Gewebeschicht (408) die Richtungsabhängigkeit abweicht.

## Revendications

1. Préforme en fibres mélangées comprenant :
au moins une première couche de tissu (408) ; et
une seconde couche de tissu (412),
dans laquelle la seconde couche de tissu (412) est positionnée au-dessus de l'au moins une première couche de tissu (408),
dans laquelle la seconde couche de tissu (412) est jointe à l'au moins une première couche de tissu (408) par renforcement dans l'épaisseur (TTR) à l'aide d'un fil mélangé (410),
dans laquelle une profondeur de transport du TTR pénètre complètement à travers une épaisseur de la seconde couche de tissu (412) et une totalité de l'au moins une première couche de tissu (408),
dans laquelle le fil mélangé (410) comprend des fibres de carbone mélangées avec des fibres fugitives et des fibres fusibles,
dans laquelle les fibres fugitives sont configurées pour être pyrolysées à partir de la préforme en fibres mélangées afin de créer un chemin à travers l'épaisseur pour l'infiltration de fluides,
dans laquelle les fibres fugitives sont composées d'un ou plusieurs polymères présentant un rendement en carbone combiné de 5 % de carbone élémentaire ou moins en poids, et une masse résiduelle inférieure à 1 % en poids, et
dans laquelle les fibres fusibles sont composées d'un ou plusieurs polymères présentant un rendement en carbone combiné de 25 % de carbone élémentaire ou plus en poids et une masse résiduelle inférieure à 1 % en poids.

2. Préforme en fibres mélangées selon la revendication 1, dans laquelle l'au moins une première couche de tissu (408) et la seconde couche de tissu (412) comprennent des fibres de carbone mélangées avec des fibres fusibles.

3. Préforme en fibres mélangées selon la revendication 1, dans laquelle l'au moins une première couche de tissu (408) et la seconde couche de tissu (412) comprennent des fibres de carbone mélangées avec des fibres fusibles et des fibres fugitives.

4. Préforme en fibres mélangées selon la revendication 1, 2 ou 3, dans laquelle un pourcentage des fibres de carbone et des fibres fugitives dans le fil mélangé est chacun d'au moins 10 % en volume.

5. Préforme en fibres mélangées selon la revendication 1, dans laquelle l'au moins une première couche de tissu (408) et la seconde couche de tissu (412) comprennent des fibres de carbone mélangées avec au moins l'une des fibres fusibles ou des fibres fugitives, dans laquelle un pourcentage des fibres de carbone dans l'au moins une première couche de tissu (408) et la seconde couche de tissu (412) dépasse un pourcentage des fibres fusibles ou des fibres fugitives dans l'au moins une première couche de tissu (408) et la seconde couche de tissu (412), et dans laquelle au moins l'une des fibres fusibles ou des fibres fugitives sont pyrolysées à partir de la préforme en fibres mélangées.

6. Préforme en fibres mélangées selon l'une quelconque des revendications précédentes, dans laquelle le TTR est uniforme sur toute une longueur de l'au moins une première couche de tissu (408) et de la seconde couche de tissu (412).

7. Préforme en fibres mélangées selon l'une quelconque des revendications 1 à 5, dans laquelle le TTR est aléatoire sur toute une longueur de l'au moins une première couche de tissu (408) et de la seconde couche de tissu (412).

8. Préforme en fibres mélangées selon l'une quelconque des revendications précédentes, dans laquelle l'au moins une première couche de tissu (408) et la seconde couche de tissu (412) présentent une directionnalité indiquée par une mèche dans chacune de l'au moins une première couche de tissu (408) et de la seconde couche de tissu (412) et dans laquelle, lors du positionnement de la seconde couche de tissu (412) au-dessus de l'au moins une première couche de tissu (408), la directionnalité est la même.

9. Préforme en fibres mélangées selon l'une quelconque des revendications 1 à 7, dans laquelle l'au moins une première couche de tissu (408) et la seconde couche de tissu (412) présentent une directionnalité indiquée par une mèche dans chacune de l'au moins une première couche de tissu (408) et de la seconde couche de tissu (412) et dans laquelle, lors du positionnement de la seconde couche de tissu (412) au-dessus de l'au moins une première couche de tissu (408), la directionnalité diffère.

10. Procédé de fabrication, comprenant :
la formation d'une préforme en fibres mélangées par :
l'agencement d'une seconde couche de tissu (412) au-dessus d'au moins une première couche de tissu (408) ; et
la jonction de la seconde couche de tissu (412) à l'au moins une première couche de tissu (408) par renforcement dans l'épaisseur (TTR) à l'aide d'un fil mélangé (410),
dans lequel une profondeur de transport du TTR pénètre complètement à travers une épaisseur de la seconde couche de tissu (412) et une totalité de l'au moins une première couche de tissu (408),
dans lequel le fil mélangé (410) comprend des fibres de carbone mélangées avec des fibres fugitives et des fibres fusibles, et
dans lequel les fibres fugitives sont pyrolysées à partir de la préforme en fibres mélangées afin de créer un chemin à travers l'épaisseur pour l'infiltration de fluides,
dans lequel les fibres fugitives sont composées d'un ou plusieurs polymères présentant un rendement en carbone combiné de 5 % de carbone élémentaire ou moins en poids, et une masse résiduelle inférieure à 1 % en poids, et dans lequel les fibres fusibles sont composées d'un ou plusieurs polymères présentant un rendement en carbone combiné de 25 % de carbone élémentaire ou plus en poids et une masse résiduelle inférieure à 1 % en poids.

11. Procédé de fabrication selon la revendication 10, dans lequel l'au moins une première couche de tissu (408) et la seconde couche de tissu (412) comprennent des fibres de carbone mélangées avec des fibres fusibles ; ou
dans lequel l'au moins une première couche de tissu (408) et la seconde couche de tissu (412) comprennent des fibres de carbone mélangées avec des fibres fusibles et des fibres fugitives.

12. Procédé de fabrication selon la revendication 10 ou 11, dans lequel un pourcentage des fibres de carbone et des fibres fugitives dans le fil mélangé est chacun d'au moins 10 % en volume.

13. Procédé de fabrication selon la revendication 10, 11 ou 12, dans lequel le TTR est uniforme sur toute une longueur de l'au moins une première couche de tissu (408) et de la seconde couche de tissu (412).

14. Procédé de fabrication selon la revendication 10, 11 ou 12, dans lequel le TTR est aléatoire sur toute une longueur de l'au moins une première couche de tissu (408) et de la seconde couche de tissu (412).

15. Procédé de fabrication selon l'une quelconque des revendications 11 à 14, dans lequel l'au moins une première couche de tissu (408) et la seconde couche de tissu (412) comprennent des fibres de carbone mélangées avec au moins l'une des fibres fusibles ou des fibres fugitives, dans lequel un pourcentage des fibres de carbone dans l'au moins une première couche de tissu (408) et la seconde couche de tissu (412) dépasse un pourcentage des fibres fusibles ou des fibres fugitives dans l'au moins une première couche de tissu (408) et la seconde couche de tissu (412), et dans lequel au moins l'une des fibres fusibles ou des fibres fugitives sont pyrolysées à partir de la préforme en fibres mélangées ; et/ou
dans lequel l'au moins une première couche de tissu (408) et la seconde couche de tissu (412) présentent une directionnalité indiquée par une mèche dans chacune de l'au moins une première couche de tissu (408) et de la seconde couche de tissu (412) et dans lequel, lors du positionnement de la seconde couche de tissu (412) au-dessus de l'au moins une première couche de tissu (408), la directionnalité est la même ; ou dans lequel l'au moins une première couche de tissu (408) et la seconde couche de tissu (412) présentent une directionnalité indiquée par une mèche dans chacune de l'au moins une première couche de tissu (408) et de la seconde couche de tissu (412) et dans lequel, lors du positionnement de la seconde couche de tissu (412) au-dessus de l'au moins une première couche de tissu (408), la directionnalité diffère.
